# EUROPÄISCHE PATENTSCHRIFT

(11) **EP 1 412 178 B1**
(45) Veröffentlichungstag und Bekanntmachung des Hinweises auf die Patenterteilung: **05.01.2005**
(21) Anmeldenummer: 02760074.1
(22) Anmeldetag: 19.06.2002
(51) Int. Cl.: B32B 17/10, C08K 5/00

(54) **WEICHMACHERHALTIGE PVB-FOLIE**
PVB FILM CONTAINING A PLASTIFYING AGENT
FEUILLE DE PVB RENFERMANT UN PLASTIFIANT

(30) Priorität: 19.06.2001 DE 10129422
(43) Veröffentlichungstag der Anmeldung: 28.04.2004
(73) Patentinhaber: HT TROPLAST AG, 53840 Troisdorf (DE)
(72) Erfinder: KELLER, Uwe, 53721 Siegburg (DE); STENZEL, Holger, 53773 Hennef (DE)
(74) Vertreter: Kisters, Michael Marcus
(86) Internationale Anmeldenummer: PCT/DE2002/002231
(87) Internationale Veröffentlichungsnummer: WO 2002/102591

(56) Entgegenhaltungen:
- EP-A- 0 324 482
- US-A- 4 537 830
- US-A- 5 349 014

## Beschreibung

### Technisches Gebiet

Die Erfindung betrifft eine als Zwischenschicht in Verbundsicherheitsgläsern geeignete weichmacherhaltige Folie auf der Basis von teilacetalisierten Polyvinylalkoholen, insbesondere auf der Basis von PVB-Harz. Verbundsicherheitsgläser bestehen im allgemeinen aus zwei Glasscheiben und einer die Glasscheiben verbindenden Klebfolie. Als Klebfolie wird ganz überwiegend eine Folie aus weichmacherhaltigen teilacetalisierten Polyvinylalkoholen, insbesondere aus Polyvinylbutyral (PVB) verwendet. Die eingangs genannten Verbundsicherheitsgläser werden beispielsweise als Windschutzscheiben oder Seitenverglasungen im Kraftfahrzeugbereich sowie als Sicherheitsverglasung im Baubereich eingesetzt.

Als Weichmacher für PVB finden in herkömmlichen PVB-Folien kommerziell überwiegend aliphatische Diester des Tri- bzw. Tetraethylenglykols Verwendung. Hierzu zählen 3GH, 3G7, 3G8 sowie 4G7, bei denen die vorangestellte Ziffer auf die Anzahl n der Wiederholungseinheit H-(O-CH₂-CH₂)ₙ-OH des Oligoethylenglykol-Anteils und H auf 2-Ethylbutyrat, 7 auf n-Heptanoat und 8 auf 2-Ethylhexanoat verweist. Weitere bekannte Weichmacher für Polyvinylbutyral sind u. A. Dialkyladipate mit aliphatischen bzw. cycloaliphatischen Esteranteilen, Dialkylsebazate, Triorganophosphate, Triorganophosphite oder Phthalatweichmacher wie Benzylbutylphthalat.

Einige Weichmacher sind mit PVB-Harzen nur begrenzt verträglich. Bei mangelnder Verträglichkeit beobachtet man ein Ausschwitzen des Weichmachers, insbesondere bei Warmlagerung und bei Lagerung in feuchter Atmosphäre. Allgemein sinkt die Verträglichkeit von Weichmachern mit der Abnahme des polaren Charakters des Weichmachers - d. h. Weichmacher mit höherer Polarität sind mit PVB besser verträglich -, und steigt mit der Abnahme des Polyvinylalkohol-Gehalts (PVOH) des PVB-Harzes.

### Stand der Technik

Es ist bereits vorgeschlagen worden, Triethylenglykol-di-2-ethylhexanoat - kurz 3G8 oder 3GEH genannt - als Weichmacher für Polyvinylbutyralfolien (PVB-Folie) zu verwenden, um Produkte mit verbesserter Feuchteresistenz zu erhalten. Wegen seines apolaren Charakters weist 3G8 jedoch nur eine geringe Verträglichkeit zu PVB auf.

Die EP 0 877 665 B1 beschreibt die Verwendung von 3G8 als Weichmacher in PVB-Folie für Verbundsicherheitsglas, wobei das verwendete PVB-Harz einen PVOH-Gehalt unterhalb 19,5 Gew.-% aufweisen muss. Ist dies nicht der Fall, tritt wegen Unverträglichkeit Ausschwitzen des Weichmachers auf. Die Verwendung von PVB-Harzen mit PVOH-Gehalten oberhalb 19,5 Gew.-% ist somit nicht möglich. Vergleichsversuche zeigen darüber hinaus, dass selbst bei Verwendung eines PVB-Harzes mit einem PVOH-Gehalt von 18,9 Gew.-% die Verträglichkeitsgrenze für 3G8 zwischen 28,5 und 30,5 Gew.-% liegt, wenn die Folie längere Zeit einer Atmosphäre von 98 % relativer Luftfeuchtigkeit bei 23 °C ausgesetzt ist.

Für PVB-Folien geeignete PVB-Harze mit einem PVOH-Gehalt unterhalb 19,5 Gew.-% sind jedoch kommerziell kaum erhältlich.

### Aufgabe

Aufgabe der vorliegenden Erfindung ist es daher, eine als Zwischenschicht in Verbundsicherheitsgläsern geeignete weichmacherhaltige Folie auf der Basis von teilacetalisierten Polyvinylalkoholen (PVB-Harz) zur Verfügung zu stellen, die diese Nachteile nicht aufweist.

### Darstellung der Erfindung

Die Erfindung löst diese Aufgabe durch eine Folie gemäß den Merkmalen des Anspruchs 1, bevorzugt in Verbindung mit einem oder mehreren Merkmalen der Unteransprüche.

Kern der Erfindung ist die Verwendung eines oder mehrerer nichtionischer Tenside als die Löslichkeit bzw. Verträglichkeit eines Weichmachers mit geringer Polarität im PVB-Harz erhöhender Zusatz.

Die erfindungsgemäße, als Zwischenschicht in Verbundsicherheitsgläsern geeignete weichmacherhaltige Folie auf der Basis von teilacetalisierten Polyvinylalkoholen (PVB-Harz) enthält 60 bis 85 Gew.-% PVB-Harz, 14 bis 39 Gew.-% Weichmacher mit geringer Polarität und bis 10 Gew.-% eines oder mehrere nichtionische Tenside als ein die Löslichkeit des Weichmachers mit geringer Polarität im PVB-Harz erhöhender Zusatz. Daneben kann die Folie weitere dem Fachmann bekannte Zusätze enthalten wie Restmengen an Wasser sowie die typischen, dem Fachmann bekannten Additive wie etwa UV-Absorber, Antioxidantien, Haftungsregulatoren, optische Aufheller, Stabilisatoren, Verarbeitungshilfsmittel, oberflächenaktive Stoffe etc.

Neben dem Weichmacher mit geringer Polarität können auch Standard-Weichmacher mit höherer Polarität eingesetzt werden. Die größten Vorteile durch den erfindungsgemäßen Zusatz des nichtionischen Tensids ergeben sich, wenn die PVB-Folie Weichmacher mit geringer Polarität in einer solchen Menge eingesetzt wird, die ohne Zusatz des nichtionischen Tensids inkompatibel zu dem PVB-Harz ist.

Zur quantitativen Beurteilung der Weichmacherkompatibilität bzw. zur Bestimmung, ob ein Weichmacher in einer bestimmten eingesetzten Menge bei einer bestimmten Rezeptur noch kompatibel ist oder nicht, wird ein als Spontan-Ausschwitz-Test bezeichneter Standard-Test eingesetzt, der in der EP 0 877 665 B1 = DE 696 09 992 T2 beschrieben ist. Soweit der Weichmacherverlust nach diesem Test unter 1 Gew.-%, bezogen auf den Weichmacher, beträgt, wird der Weichmacher als kompatibel betrachtet, bei einem Weichmacherverlust von mehr als 1 Gew.-%, als inkompatibel. Für eine schnelle qualitative Beurteilung der Weichmacherverträglichkeit reicht es aus, wenn ein Teststreifen einer PVB-Folie in einer mit Wasserdampf gesättigten Atmosphäre gelagert wird. Zur Einstellung einer Atmosphäre mit hoher relativer Luftfeuchtigkeit (RL) wird in einem geschlossenen Gefäß, wie z. B. einem Glasexsiccator, eine gesättigte wässrige Lösung aus Kupfersulfatpentahydrat mit einem Bodensatz hergestellt. Über dieser Lösung stellt sich bei 23 °C eine Gleichgewichtsfeuchte von 98 % RL ein. Durch die Aufnahme von Wasser und der damit einher gehenden Zunahme der Polarität lässt sich bei wenig verträglichen Systemen der Weichmacher verdrängen und tritt mit der Zeit an der Oberfläche der Folie als gut sichtbarer Film oder in Tropfenform aus. Bei verträglichen Formulierungen kann an Teststreifen selbst nach 30 Tagen kein Weichmacheraustritt festgestellt werden, wogegen dies bei unverträglichen Formulierungen häufig schon nach 24 h der Fall ist.

Bevorzugt wird als teilacetalisierter Polyvinylalkohol ein Polyvinylbutyral mit einem Hydoxylgruppengehalt von größer 19,5 Gew.-%, berechnet nach ASTM D 1396 als Polyvinylalkohol (PVOH), in dieser Anmeldung auch verkürzt Polyvinylalkohol-Gehalt oder PVOH-Gehalt genannt, eingesetzt, da sich bei diesen Harzen der Vorteil des erfindungsgemäßen Zusatzes an nichtionischen Tensiden am besten nutzen lässt. Grundsätzlich verbessert der Einsatz der nichtionischen Tenside die Verträglichkeit jedoch auch bei PVB-Rezepturen, deren Polyvinylalkohol-Gehalt unterhalb von 19,5 Gew.-% liegt.

Nach einer bevorzugten Ausgestaltung der Erfindung wird als nichtionisches Tensid ein mehrfach ethoxylierter aliphatischer oder aromatischer Alkohol, im Alkoholanteil mindestens 6 Kohlenstoffatome enthaltend, mit einem mittleren Ethoxylierungsgrad größer/gleich 2, eingesetzt. Besonders bevorzugt sind mehrfach ethoxylierte aliphatische oder aromatische Alkohole, im Alkoholanteil 8 bis 20 Kohlenstoffatome enthaltend, mit einem mittleren Ethoxylierungsgrad von 3 bis 10.

Beispiele für nichtionische Tenside im Sinne der Erfindung sind MARLOPHEN® NP 6, ein im Mittel 6-fach ethoxyliertes Nonylphenol, MARLIPAL® O 13/40, ein im Mittel 4-fach ethoxylierter Fettalkohol, ISOFOL® 12 + 5 EO, ein im Mittel 5-fach ethoxyliertes 2-Butyloctanol, sämtlich Produkte der Firma Condea. Ein weiteres Beispiel ist mit Berol® 840, einem eng verteilten 4-fach ethoxylierten C8-Alkohol der Firma Akzo Nobel gegeben.

Bevorzugt werden das oder die nichtionischen Tenside in einer Menge von 1 bis 9 Gew.-%, insbesondere 2 bis 4 Gew.-%, bezogen auf den Gesamtansatz der Folie, eingesetzt. Das oder die nichtionische Tenside sollten jedenfalls zumindest in einer solchen Menge eingesetzt werden, die zu einer vollständigen Löslichkeit und damit Kompatibilität des eingesetzten Weichmachers bzw. Weichmachergemisches in der gewählten Rezeptur führt.

Das Verhältnis von Weichmacher mit geringer Polarität zu dem nichtionischen Tensid - bezogen auf die Gewichtsanteile in der Folie - ist bevorzugt größer als 2,7:1, insbesondere größer als 3 und kleiner als 10.

Als Weichmacher geringer Polarität wird bevorzugt Triethylenglykol-di-2-ethylhexanoat (3G8) eingesetzt. Die Erfindung ist jedoch nicht auf 3G8 beschränkt, die Verwendung der nichtionischen Tenside kann vielmehr auch mit anderen Weichmachern, die aufgrund ihres apolaren Charakters in den gewünschten Mengen inkompatibel zu dem eingesetzten PVB-Harz sind, kombiniert werden.

Als Weichmacher geringer Polarität im Bezug auf Polyvinylbutyral werden in dieser Beschreibung solche Weichmacher betrachtet, die bei 25 °C einen Löslichkeitsparameter δ kleiner 8,60 (cal/cm³)^{1/2} bzw. 17,59 (J/cm³)^{1/2} aufweisen. Der Einfachheit halber kann δ anhand der sogenannten Small'schen Konstanten, wie sie sich tabelliert in "Lösungsmittel und Weichmachungsmittel" finden (Band 1, 8. Auflage, Seite 593, Gnamm/Fuchs, Wissenschaftliche Verlagsgesellschaft mbH Stuttgart 1980), ermittelt werden. Beispielsweise kommt Triethylenglykol-di-nheptanoat (3G7) ein δ von 8,71 (cal/cm³)^{1/2} zu, während Triethylenglykol-di-2-ethylhexanoat (3G8) ein δ von 8,51 (cal/cm³)^{1/2} hat.

Die erfindungsgemäße, als Zwischenschicht in Verbundsicherheitsgläsern geeignete weichmacherhaltige Folie auf der Basis von teilacetalisierten Polyvinylalkoholen (PVB-Harz) lässt sich mit einer oder mehreren Glasscheiben in dem Fachmann bekannter Weise zu Verbundsicherheitsgläsern sowohl für den Automobilbereich als auch für den Baubereich weiterverarbeiten.

### Wege zur Ausführung der Erfindung und Vergleichsversuche

Für die erfindungsgemäßen Beispiele B1 bis B10 und die Vergleichsbeispiele V1 bis V8 wurden weichgemachte PVB-Folien zur Überprüfung ihres Ausschwitzverhaltens auf einem handelsüblichen Extruder bei einer maximalen Massetemperatur von 200 °C in dem Fachmann bekannter Weise hergestellt.

Variiert wurde in den Beispielen und den Vergleichsbeispielen der PVOH-Gehalt des PVB-Harzes, der Typ des eingesetzten nichtionischen Tensides und dessen Menge. Weiterhin wurden Versuche mit 3G8 als dem bevorzugten apolaren, mit üblichem PVB nicht kompatiblen Weichmacher und 3G7 als einem mit Standard-PVB gut verträglichen Weichmacher durchgeführt. Die Ergebnisse sind in den Tabellen 1 und 2 dargestellt.

Die Bestimmung der Weichmacherverträglichkeit erfolgte qualitativ nach folgender Testmethode: Zur Bestimmung des Ausschwitzverhaltens wird ein Teststreifen bei 23 °C in einem Glasexsiccator mit 98 % relativer Luftfeuchtigkeit gelagert. Durch die Aufnahme von Wasser und der damit einhergehenden Zunahme der Polarität lässt sich bei wenig verträglichen Systemen der Weichmacher verdrängen und tritt mit der Zeit an der Oberfläche der Folie als gut sichtbarer Film oder in Tropfenform aus. Bei verträglichen Formulierungen kann an Teststreifen selbst nach 30 Tagen kein Weichmacheraustritt festgestellt werden, wogegen dies bei unverträglichen Formulierungen häufig schon nach 24 h der Fall ist. Zur Einstellung einer Atmosphäre mit hoher relativer Luftfeuchtigkeit (RL) wird in dem Glasexsiccator eine gesättigte wässrige Lösung aus Kupfersulfatpentahydrat mit einem Bodensatz hergestellt. Über dieser Lösung stellt sich bei 23 °C eine Gleichgewichtsfeuchte von 98 % RL ein.

In Beispiel B1 wurde MARLOPHEN® NP 6, ein im Mittel 6-fach ethoxyliertes Nonylphenol, als nichtionischen Tensid in einer Menge von 4 Gew.-% eingesetzt. Die Folie auf Basis eines PVB-Harzes mit einem PVOH-Gehalt von 20,3 Gew.-% wies einen Gehalt von 24 Gew.-% 3G8 als Weichmacher auf. Durch den erfindungsgemäßen Einsatz des 6-fach ethoxyliertes Nonylphenols als nichtionisches Tensid zeigte sich keinerlei Weichmacher-Ausschwitzen.

In den Beispielen B2 bis B4 wurden ähnliche Rezepturen mit modifizierten PVOH- und Tensidmengen durchgeführt, wobei sich ebenfalls keinerlei Weichmacher-Ausschwitzen ergab.

Eine Folie gemäß Vergleichsbeispiel V1 ohne Tensidzusatz zeigt im Vergleich hierzu nach kurzer Zeit einen erheblichen Weichmacherverlust, der zu einem sichtbaren Weichmacher-Ausschwitzen führt.

In den Beispielen B5 bis B10 wurden ähnliche Rezepturen wie in Beispielen B1 bis B4 mit anderen Tensiden bzw. Tensidmengen durchgeführt, wobei sich jeweils keinerlei Weichmacher-Ausschwitzen ergab. Eingesetzt wurden ISOFOL® 12 + 4EO, ein im Mittel 4-fach ethoxyliertes 2-Butyloctanol, ISOFOL® 18T + 6 EO, ein im Mittel 6-fach ethoxylierter einfach verzweigter aliphatischer Alkohol mit 18 C-Atomen, MARLIPAL® O 13/40, ein im Mittel 4-fach ethoxylierter Fettalkohol, MARLIPAL® O 13/60, ein im Mittel 6-fach ethoxylierter Fettalkohol, ISOFOL® 12 + 5 EO, ein im Mittel 5-fach ethoxyliertes 2-Butyloctanol und schließlich Berol® 840, einem eng verteilten 4-fach ethoxylierten C8-Alkohol.

Anhand des Vergleichsbeispiels V2 wurde nachgewiesen, dass der Zusatz von 4 Gew.-% des Standardweichmachers 3G7 anstelle des erfindungsgemäß eingesetzten nichtionischen Tensides das Ausschwitzen des Weichmachers 3G8 nicht verhindern kann.

Anhand der Versuche V2 bis V3 wurde geprüft, welche 3G8-Mengen bei einem PVB mit sehr geringen PVOH-Gehalt von 18,9 Gew.-% ohne den erfindungsgemäßen Zusatz eines nichtionischen Tensides noch verträglich sind: oberhalb von ca. 29 Gew.-% 3G8-Gehalt schwitzte der Weichmacher aus.

Die Vergleichsbeispiele V6 bis V8 zeigen, dass zu geringe Mengen an nichtionischen Tensiden, hier unter 1 Gew.-%, insbesondere bei einem PVB mit relativ hohem PVOH-Gehalt von 20,5 Gew.-% eine zu geringe Wirkung haben, um den Weichmacherverlust zu verhindern. Jedoch zeigten diese Beispiele bereits ein geringeres Maß an Weichmacherverlust als das Beispiel V1 ohne den Zusatz von nichtionischen Tensiden.

**Tabelle 1**

| **Rezeptur** | **B1** | **B2** | **B3** | **B4** | **B5** | **B6** | **B7** | **B8** | **B9** | **B10** |
|---|---|---|---|---|---|---|---|---|---|---|
| PVB [Gew.-%] | 72 | 72 | 74 | 70 | 72 | 72 | 72 | 72 | 72 | 72 |
| PVOH-Gehalt des PVB [Gew.-%] | 20,3 | 20,7 | 20,6 | 20,6 | 20,5 | 20,5 | 20,5 | 20,5 | 20,1 | 20,1 |
| 3G8 [Gew.-%] | 24 | 24 | 22,3 | 25,7 | 24 | 24 | 24 | 24 | 26 | 22 |
| Marlophen NP 6 | 4 | 4 | 3,7 | 4,3 | - | - | - | - | - | - |
| Isofol 12 + 4 EO | - | - | - | - | - | - | 4 | - | - | - |
| Isofol 18T + 6 EO | - | - | - | - | - | - | - | 4 | - | - |
| Marlipal O 13/40 | - | - | - | - | 4 | - | - | - | - | - |
| Marlipal O 13/60 | - | - | - | - | - | 4 | - | - | - | - |
| Isofol 12 + 5 EO | - | - | - | - | - | - | - | - | 2 | 6 |
| Berol 840 | - | - | - | - | - | - | - | - | - | - |
| 3G7 [Gew.-%] | - | - | - | - | - | - | - | - | - | - |
| Zeigt nach 30 Tagen Ausschwitzen | nein | nein | nein | nein | nein | nein | nein | nein | nein | nein |

**Tabelle 2**

| **Rezeptur** | **V1** | **V2** | **V3** | **V4** | **V5** | **V6** | **V7** | **V8** |
|---|---|---|---|---|---|---|---|---|
| PVB [Gew.-%] | 74 | 74 | 66,9 | 69,5 | 71,5 | 72 | 72 | 72 |
| PVOH-Gehalt des PVB [Gew.-%] | 20,2 | 20,2 | 18,9 | 18,9 | 18,9 | 20,5 | 20,5 | 20,5 |
| 3G8 [Gew.-%] | 26 | 22 | 33,1 | 30,5 | 28,5 | 27,5 | 27,8 | 27,8 |
| Marlophen NP 6 | - | - | - | - | - | - | - | - |
| Isofol 12 + 4 EO | - | - | - | - | - | - | - | 0,2 |
| Isofol 18T + 6 EO | - | - | - | - | - | - | - | - |
| Marlipal O 13/40 | - | - | - | - | - | - | - | - |
| Marlipal O 13/60 | - | - | - | - | - | - | - | - |
| Isofol 12 + 5 EO | - | - | - | - | - | - | - | - |
| Berol 840 | - | - | | | | 0,5 | 0,2 | - |
| 3G7 [Gew.-%] | - | 4 | - | - | - | - | - | - |
| Zeigt nach 30 Tagen Ausschwitzen | ja | ja | ja | ja | nein | ja | ja | ja |

## Patentansprüche

1. Als Zwischenschicht in Verbundsicherheitsgläsern geeignete weichmacherhaltige Folie auf der Basis von teilacetalisierten Polyvinylalkoholen (PVB-Harz), enthaltend
a)60 bis 85 Gew.-% PVB-Harz
b)14 bis 39 Gew.-% Weichmacher mit geringer Polarität,
c)bis 10 Gew.-% eines oder mehrere nichtionische Tenside als ein die Löslichkeit des Weichmachers mit geringer Polarität im PVB-Harz erhöhender Zusatz.

2. Folie nach Anspruch 1, **dadurch gekennzeichnet, dass** das Verhältnis von Weichmacher mit geringer Polarität zu dem nichtionischen Tensid - bezogen auf die Gewichtsanteile in der Folie - größer als 2,7:1 ist.

3. Folie nach Anspruch 1 oder 2, **dadurch gekennzeichnet, dass** der Weichmacher mit geringer Polarität in einer solchen Menge eingesetzt wird, die ohne Zusatz des nichtionischen Tensids inkompatibel zu dem PVB-Harz ist.

4. Folie nach einem der Ansprüche 1 bis 3, **dadurch gekennzeichnet, dass** das oder die nichtionische Tenside in einer Menge von 2 bis 4 Gew.-%, bezogen auf den Gesamtansatz der Folie, eingesetzt werden.

5. Folie nach einem der Ansprüche 1 bis 4, **dadurch gekennzeichnet, dass** als PVB-Harz ein teilbutyralisierter Polyvinylalkohol mit einem PVOH-Gehalt > 19,5 Gew.-% eingesetzt wird.

6. Folie nach einem der Ansprüche 1 bis 5, **dadurch gekennzeichnet, dass** als Weichmacher geringer Polarität Triethylenglykol-di-2-ethylhexanoat (3G8) eingesetzt wird.

7. Folie nach einem der Ansprüche 1 bis 6, **dadurch gekennzeichnet, dass** als nichtionisches Tensid ein mehrfach ethoxylierter aliphatischer oder aromatischer Alkohol, im Alkoholanteil mindestens 6 Kohlenstoffatome enthaltend, mit einem mittleren Ethoxylierungsgrad größer/gleich 2, eingesetzt wird.

8. Folie nach Anspruch 7, **dadurch gekennzeichnet, dass** als nichtionisches Tensid ein mehrfach ethoxylierter aliphatischer oder aromatischer Alkohol, im Alkoholanteil 8 bis 20 Kohlenstoffatome enthaltend, mit einem mittleren Ethoxylierungsgrad von 3 bis 10, eingesetzt wird.

9. Verbundsicherheitsglas mit wenigstens einer Glasscheibe und wenigstens einer an diese Glasscheibe angrenzenden Folie nach einem der Ansprüche 1 bis 8.

10. Verwendung eines oder mehrerer nichtionischer Tenside aus der Gruppe bestehend aus mehrfach ethoxylierter aliphatischer oder aromatischer Alkohol, im Alkoholanteil mindestens 6 Kohlenstoffatome enthaltend und mit einem mittleren Ethoxylierungsgrad größer/gleich 2, bevorzugt im Alkoholanteil 8 bis 20 Kohlenstoffatome enthaltend und mit einem mittleren Ethoxylierungsgrad von 3 bis 10, als ein die Löslichkeit eines Weichmachers mit geringer Polarität im PVB-Harz erhöhender Zusatz.

11. Verwendung eines oder mehrerer nichtionischer Tenside nach Anspruch 10 als ein die Löslichkeit des Weichmachers Triethylenglykol-di-2-ethylhexanoat (3G8) im PVB-Harz erhöhender Zusatz.

12. Verwendung eines oder mehrerer nichtionischer Tenside nach Anspruch 10 oder 11, **dadurch gekennzeichnet, dass** die nichtionischen Tenside in einer Menge von 2 bis 10 Gew.-%, bezogen auf die Gesamtrezeptur der Folie, eingesetzt werden.

## Claims

1. A plasticized foil based on partially acetalized polyvinyl alcohols (PVB resin) and suitable as an intermediate layer in laminated safety glass, and comprising
a) from 60 to 85% by weight of PVB resin
b) from 14 to 39% by weight of low-polarity plasticizer,
c) up to 10% by weight of one or more non-ionic surfactants as an additive increasing the solubility of the low-polarity plasticizer in the PVB resin.

2. The foil as claimed in claim 1, **characterized in that** the ratio of low-polarity plasticizer to the non-ionic surfactant - based on the parts by weight in the foil - is greater than 2.7:1.

3. The foil as claimed in claim 1 or 2, **characterized in that** the amount used of the low-polarity plasticizer is such as to be incompatible with the PVB resin without addition of the non-ionic surfactant.

4. The foil as claimed in any of claims 1 to 3, **characterized in that** the amount used of the non-ionic surfactant(s) is from 2 to 4% by weight, based on the entire foil mixture.

5. The foil as claimed in any of claims 1 to 4, **characterized in that** the PVB resin used comprises a partially butyralized polyvinyl alcohol with a PVOH content > 19.5% by weight.

6. The foil as claimed in any of claims 1 to 5, **characterized in that** the low-polarity plasticizer used comprises triethylene glycol di-2-ethylhexanoate (3G8).

7. The foil as claimed in any of claims 1 to 6, **characterized in that** the non-ionic surfactant used comprises a polyethoxylated aliphatic or aromatic alcohol having at least 6 carbon atoms in its alcohol fraction, with an average degree of ethoxylation greater than or equal to 2.

8. The foil as claimed in claim 7, **characterized in that** the non-ionic surfactant used comprises a polyethoxylated aliphatic or aromatic alcohol having from 8 to 20 carbon atoms in its alcohol fraction, with an average degree of ethoxylation of from 3 to 10.

9. A laminated safety glass with at least one glass pane and with at least one foil as claimed in any of claims 1 to 8 adjoining this glass pane.

10. The use of one or more non-ionic surfactants from the group consisting of polyethoxylated aliphatic or aromatic alcohol containing at least 6 carbon atoms in the alcohol fraction, with an average degree of ethoxylation greater than or equal to 2, preferably containing from 8 to 20 carbon atoms in the alcohol fraction, with an average degree of ethoxylation of from 3 to 10, as an additive increasing the solubility of a low-polarity plasticizer in the PVB resin.

11. The use of one or more non-ionic surfactants as claimed in claim 10 as an additive increasing the solubility of the plasticizer triethylene glycol di-2-ethylhexanoate (3G8) in the PVB resin.

12. The use of one or more non-ionic surfactants as claimed in claim 10 or 11, **characterized in that** the amount used of the non-ionic surfactants is from 2 to 10% by weight, based on the total foil mixing specification.

## Revendications

1. Feuille à base d'alcools polyvinyliques partiellement acétalisés (résine de PVB), contenant un plastifiant et convenant comme couche intermédiaire dans des verres stratifiés de sécurité, feuille qui contient :
a) 60 à 85 % en poids de résine de PVB,
b) 14 à 39 % en poids d'un plastifiant à faible polarité,
c) jusqu'à 10 % en poids d'un ou plusieurs tensio-actifs non-ioniques, en tant qu'additif augmentant la solubilité du plastifiant à faible polarité dans la résine de PVB.

2. Feuille selon la revendication 1, **caractérisée en ce que** le rapport du plastifiant à faible polarité au tensio-actif non-ionique, ce rapport étant déduit des proportions en poids dans la feuille, est supérieur à 2,7:1.

3. Feuille selon la revendication 1 ou 2, **caractérisée en ce que** l'on utilise le plastifiant à faible polarité en une quantité telle qu'elle est incompatible avec la résine de PVB sans l'addition du tensio-actif non-ionique.

4. Feuille selon l'une quelconque des revendications 1 à 3, **caractérisée en ce que** l'on utilise le tensio-actif non-ionique ou les tensio-actifs non-ioniques en une proportion de 2 à 4 % en poids par rapport à la totalité de la feuille.

5. Feuille selon l'une quelconque des revendications 1 à 4, **caractérisée en ce que** l'on utilise comme résine de PVB, un alcool polyvinylique partiellement butyralisé, ayant une teneur en PVOH supérieure à 19,5 % en poids.

6. Feuille selon l'une quelconque des revendications 1 à 5, **caractérisée en ce qu'**on utilise comme plastifiant à faible polarité, du di(2-éthylhexanoate) de triéthylèneglycol (3G8).

7. Feuille selon l'une quelconque des revendications 1 à 6, **caractérisée en ce qu'**on utilise comme tensio-actif non-ionique, un alcool aliphatique ou aromatique, plusieurs fois éthoxylé, contenant dans la partie alcool au moins 6 atomes de carbone et ayant un degré d'éthoxylation moyen supérieur ou égal à 2.

8. Feuille selon la revendication 7, **caractérisée en ce qu'**on utilise comme tensio-actif non-ionique, un alcool aliphatique ou aromatique, plusieurs fois éthoxylé, contenant dans la partie alcool 8 à 20 atomes de carbone et ayant un degré d'éthoxylation moyen de 3 à 10.

9. Verre stratifié de sécurité comportant au moins une plaque de verre et au moins une feuille selon l'une quelconque des revendications 1 à 8, accolée à cette plaque de verre.

10. Utilisation d'un ou plusieurs tensio-actifs non-ioniques pris parmi les alcools aliphatiques ou aromatiques, plusieurs fois éthoxylés, contenant dans la partie alcool au moins 6 atomes de carbone et ayant un degré d'éthoxylation moyen supérieur ou égal à 2, ledit alcool ayant de préférence 8 à 20 atomes de carbone dans la partie alcool et un degré d'éthoxylation moyen de 3 à 10, en tant qu'additif augmentant la solubilité d'un plastifiant à faible polarité dans une résine de PVB.

11. Utilisation d'un ou plusieurs tensio-actifs non-ioniques selon la revendication 10, en tant qu'additif augmentant la solubilité du plastifiant di(2-éthylhexanoate) de triéthylèneglycol (3G8) dans la résine de PVB.

12. Utilisation d'un ou plusieurs tensio-actifs non-ioniques selon la revendication 10 ou 11, **caractérisée en ce qu'**on utilise les tensio-actifs non-ioniques en une proportion de 2 à 10 % en poids par rapport à la totalité de la composition de la feuille.
